Europäisches Patentamt

**European Patent Office**

**Office européen des brevets**

(19)

(11) Numéro de publication: **0 238 448**
**A2**

(12) # DEMANDE DE BREVET EUROPEEN

(21) Numéro de dépôt: **87830021.9**

(51) Int. Cl.³: **F 16 H 1/16**

(22) Date de dépôt: **20.01.87**

(30) Priorité: **21.01.86 IT 8550686**

(43) Date de publication de la demande:
**23.09.87 Bulletin 87/39**

(84) Etats contractants désignés:
**AT BE DE ES FR GB IT**

(71) Demandeur: **Carollo, Giannivo**
**Via Vignaletti, 24**
**I-36030 Zugliano (Vicenza)(IT)**

(71) Demandeur: **Scolaro, Renato**
**P. Silva, 81**
**I-36035 Marano Vicentino (Vicenza)(IT)**

(72) Inventeur: **Carollo, Giannivo**
**Via Vignaletti, 24**
**I-36030 Zugliano (Vicenza)(IT)**

(72) Inventeur: **Scolaro, Renato**
**P. Silva, 81**
**I-36035 Marano Vicentino (Vicenza)(IT)**

(74) Mandataire: **Bettello, Luigi, Dott. Ing.**
**Via Col d'Echele, 25**
**I-36100 Vicenza(IT)**

(54) **Réducteur de vitesse à vis sans fin et roue hélicoïdale.**

(57) Le réducteur de vitesse à vis sans fin et roue hélicoïdale comporte une série de billes (6) étroitement entassées à l'intérieur de canaux à section semi-circulaire (7) ménagés dans la vis sans fin 1 en vis-à-vis de canaux correspondants (19) creusés dans la roue hélicoîdale (11). Il est prévu que la remise en circulation des billes s'effectue à travers un conduit axial (8) pratiqué dans la vis sans fin; les billes sont retenues vers l'extérieur par la gaine (5) qui renferme à rotation la vis sans fin (1), ces billes garantissant l'accouplement mécanique des deux éléments avec des forces de friction très réduites qui assurent un rendement mécanique très élevé de l'ensemble.

EP 0 238 448 A2

./...

FIG. 1

La présente invention a pour but de permettre la réalisation d'un réducteur de vitesse qui comprend une vis sans fin associée à une roue hélicoïdale et dont la caractéristique essentielle réside dans le fait qu'entre les deux éléments sus-mentionnés l'accouplement mécanique est obtenu au moyen de billes à circulation automatique, ce système permettant de réduire de manière sensible la friction déterminée par le glissement des deux métaux.

Substantiellement parlant, l'invention prévoit qu'une série de billes circulent à l'intérieur d'une piste ménagée entre les dents de la roue hélicoïdale et celles de la vis sans fin, en étant maintenues vers l'extérieur par une gaine cylindrique de retenue qui permet un recyclage continu.

Un onglet métallique convenablement profilé et agencé favorise la remise en circulation des billes, tandis que deux anneaux de butée, prévus aux deux extrémités de la vis, empêchent la sortie desdites billes hors de la piste de déplacement ainsi ménagée.

On sait que dans les réducteurs de vitesse du type à vis sans fin et roue hélicoïdale, la friction entre ces deux éléments s'avère toujours sensiblement élevée en provoquant en conséquence un abaissement important du rendement mécanique de l'ensemble.

Les réducteurs de vitesse à vis sans fin et roue hélicoïdale connus à l'heure actuelle comportent en effet un accouplement mécanique du type à glissement entre une vis en acier trempé et rectifié et une roue dentée en bronze.

Le glissement est déterminé par le fait qu'à chaque tour de la vis correspond un déplacement d'une dent de la roue si la vis comprend un seul filet, ou le déplacement de deux ou plus de deux dents lorsque la vis est du type à deux ou plus de deux filets.

Ing. Luigi Bettelle

Dans tous les cas, les vitesses périphériques des dents de la vis et de la roue sont très différentes, si bien qu'on assiste inévitablement à un glissement entre les deux éléments en contact, ce qui provoque un médiocre rendement mécanique et une usure sensible des métaux à plus faible dureté.

Tous les remèdes qui ont été proposés, visant aussi bien le profil des dents de la vis et de la roue que les matériaux employés, n'ont permis qu'une réduction très modeste de la friction réciproque et qu'une augmentation très faible du rendement.

Dans chaque cas, par suite de la grande différence existant entre les vitesses périphériques des deux éléments accouplés, la friction reste toujours assez élevée et le rendement assez faible.

Moyennant au contraire l'adoption de la présente invention, la présence des billes dans la zone de contact entre la vis sans fin et la roue hélicoïdale élimine la friction tangentielle qui se transforme en friction "rotulante", avec une réduction drastique des pertes mécaniques et une forte augmentation du rendement de l'accouplement. En plus de cela, l'on doit considérer les avantages inhérents au fait qu'il n'est plus nécessaire d'avoir recours à des alliages coûteux pour la réalisation des surfaces en contact, puisqu'aussi bien pour la vis sans fin que pour les dents de la roue hélicoïdale, il est possible sans autre inconvénient d'employer un alliage quelconque d'acier de coût nettement inférieur.

En particulier, il est possible d'employer des aciers aptes à être soumis à des traitements thermiques tels que la trempe ou la cémentation.

Intervenant non plus par friction mais par roulement des billes, le contact entre les dents permet une augmentation de la durée utile du réducteur.

Jng. Luigi Bettelle

La diminution très importante des pertes mécaniques assure par ailleurs un abaissement sensible de la température de fonctionnement, en opérant de la sorte la réduction correspondante des pertes mécaniques et une augmentation analogue du rendement.

On conçoit sans peine la facilité de réalisation des dents des éléments en contact, qui peuvent petre obtenues en utilisant des outils usuels munis de plaquettes à profil circulaire, avec une réduction notable du coût d'usinage.

L'économie énergétique qui fait suite à la réduction des pertes mécaniques permet l'emploi, à égalité de couple de sortie, d'un moteur d'entraînement de puissance réduite, parfaitement acceptable par suite de l'accroissement de rendement obtenu.

L'invention va maintenant être ci-après décrite et illustrée de manière plus détaillée avec l'aide des planches de dessins annexées dans lesquelles :

La fig. 1 (planche I) montre en coupe longitudinale partielle l'ensemble formé par une vis sans fin et une roue hélicoïdale conformes à l'invention.

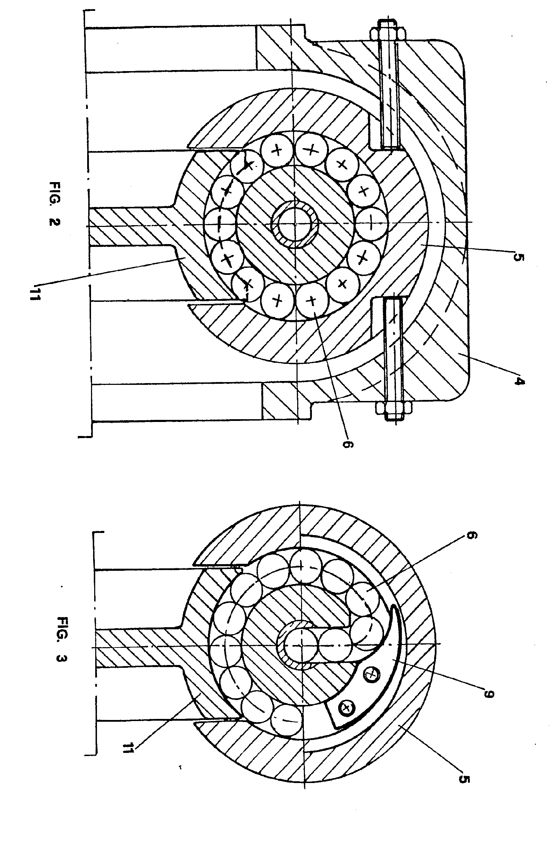

La fig. 2 (planche II) est une coupe suivant la ligne II-II de fig. 1.

La fig. 3 montre la coupe suivant la ligne III-III de fig. 1.

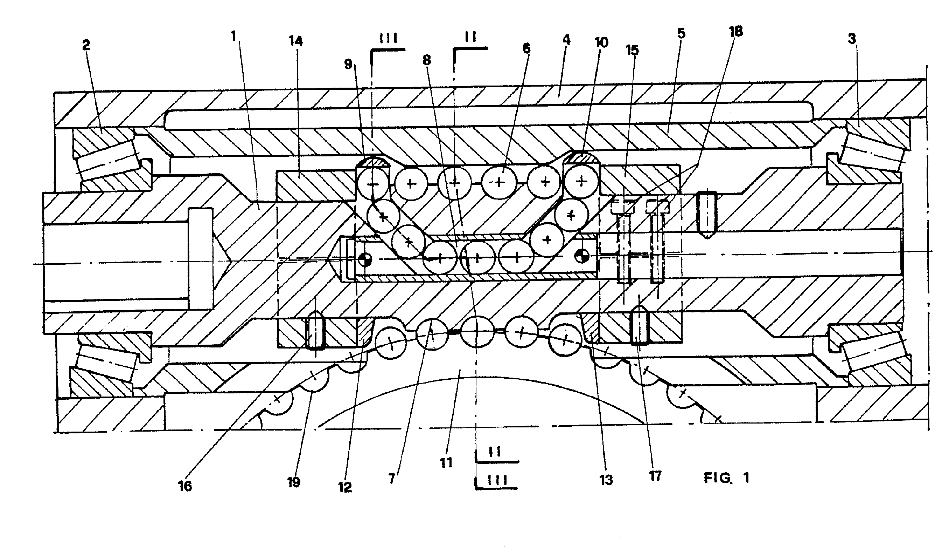

Comme on peut le voir plus particulièrement en fig. 1, la vis sans fin 1 est maintenue par deux roulements à galets coniques 2 et 3 à l'intérieur d'un carter cylindrique 4 qui renferme en outre la gaine de séparation 5 convenablement profilée, notamment dans sa partie centrale, afin de retenir les billes 6 au cours de leur mouvement. Ces billes se déplacent dans les canaux 7 à section semi-circulaire et à profil hélicoïdal ménagés dans la vis sans fin, en étant

*Ing. Luigi.Bettelle*

ramenées à l'intérieur du conduit axial 8 par l'onglet 9, solidaire de la vis 1 de façon à tourner avec celle-ci ; un onglet 10, disposé de manière symétrique par rapport à l'onglet 9, assure le guidage des billes qui circulent le long du cheminement de retour, sur le côté extérieur de ladite vis.

Substantiellement toute la piste formée par les canaux hélicoïdaux prévus entre la vis sans fin 1 et la roue hélicoïdale 11, elle-même creusée de canaux hélicoïdaux 19 à section semi-circulaire, est remplie de billes qui assurent l'accouplement entre les deux éléments vis sans fin 1 et roue hélicoïdale 11 mutuellement associés, en évitant tout contact direct entre ceux-ci.

Les deux butées 12 et 13 convenablement prévues aux extrémités de la partie utile de la vis sans fin 1 et maintenues par les douilles 14 et 15, empêchent que les billes puissent sortir des canaux hélicoïdaux de la roue 1 et font en sorte que ces billes soient ramenées par les onglets 9 et 10 dans le conduit axial 8 de remise en circulation.

Il va de soi que lorsque la vis sans fin 1 tourne dans un sens de rotation déterminé, la circulation s'effectue dans une direction donnée, tandis que pour le sens de rotation opposé, cette même circulation s'effectue en direction inverse. De manière avantageuse, les douilles d'extrémités 14 et 15, retenues en position par les vis sans tête 16 et 17, sont réalisées en deux pièces assemblées l'une à l'autre, par exemple par des vis telles que 18.

Le remplissage des conduits hélicoïdaux à l'aide des billes 6 est effectué préalablement au montage de la roue dentée 11, jusqu'à remplissage complet de la piste.

Il va de soi que les détails particuliers de construction du réducteur de vitesse qui vient d'être décrit et qui est illustré sur les planches de dessins annexées, peuvent subir des variantes et des formes de réalisation différentes, tout

ing. Luigi Bettelle

en maintenant les caractéristiques essentielles de l'invention en ce que concerne la circulation des billes dans la zone de contact entre la vis sans fin et la roue hélicoïdale, sans pour autant sortir du domaine de brevet.

On comprend que la vis sans fin 1 peut comporter, non pas un seul filet, mais deux ou plus de deux filets tout en conservant les caractéristiques ci-dessus décrites, c'est-à-dire en prévoyant qu'à chaque filet de la vis doit correspondre un canal séparé pour la circularion des billes à l'intérieur de ladite vis.

Ing. *Luigi Bettelle*

Revendications

1. Réducteur de vitesse du genre comprenant une vis sans fin (1) pourvue d'un ou de plusieurs filets et une roue hélicoïdale (11), caractérisé en ce que la vis sans fin ainsi que la roue hélicoïdale sont creusées de canaux semi-circulaires (7-19) disposés en vis-à-vis, afin de permettre la circulation de billes (6) dans la zone de contact, une gaine cylindrique (5) appropriée et un conduit interne (8) étant prévus pour la remise en circulation des billes qui assurent de ce fait l'accouplement mécanique entre les deux éléments (1, 11) avec une réduction sensible des pertes mécaniques dues à la friction et une forte augmentation correspondante du rendement mécanique de l'ensemble.

2. Réducteur de vitesse suivant la revendication 1, caractérisé en ce qu'il comprend deux onglets convenablements profilés (9, 10) et deux butées d'extrémités (12, 13) fixées à l'aide de douilles appropriées (14, 15) à la vis sans fin (1), afin d'assurer la remise en circulation correcte des billes dans chacune des pistes hélicoïdales prévues dans l'accouplement entre la vis sans fin et la roue correspondante.

3. Réducteur de vitesse suivant l'une quelconque des revendications 1 et 2, caractérisé en ce que la vis sans fin (1) tourne à l'intérieur d'un carter cylindrique de fermeture (4) muni de la gaine (5) qui maintient les billes (6) dans la piste hélicoïdale de la vis sans fin, laquelle piste est ainsi complètement remplie au cours du fonctionnement.

4. Réducteur de vitesse suivant l'une quelconque des revendications 1 à 3, caractérisé en ce que le conduit axial (8) relié aux canaux hélicoïdaux de la vis sans fin permet la remise en circulation des billes au cours du fonctionnement de l'ensemble, d'une extrémité à l'autre de la partie utile de l'accouplement entre la vis sans fin et la roue hélicoïdale.

Jng. Luigi Bettelle

5. Réducteur de vitesse suivant les revendications 1 à 4, caractérisé en ce qu'il est prévu deux onglets convenablement profilés (9, 10) pour assurer la remise en circulation des billes (6) à travers le conduit de retour (8) au cours du fonctionnement de l'ensemble.

Ing. Luigi Bettelle

FIG. 1

0238448

FIG. 2

FIG. 3